(19) Europäisches Patentamt / European Patent Office / Office européen des brevets

(11) **EP 4 459 879 A1**

(12) **EUROPEAN PATENT APPLICATION**
published in accordance with Art. 153(4) EPC

(43) Date of publication:
**06.11.2024 Bulletin 2024/45**

(21) Application number: **22918470.0**

(22) Date of filing: **28.12.2022**

(51) International Patent Classification (IPC):
**H04B 1/10** (2006.01)    **H04B 1/525** (2015.01)

(52) Cooperative Patent Classification (CPC):
**H04B 1/10; H04B 1/16; H04B 1/525; H04W 88/08**

(86) International application number:
**PCT/CN2022/142857**

(87) International publication number:
**WO 2023/131029 (13.07.2023 Gazette 2023/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.01.2022 CN 202210004327**

(71) Applicant: ZTE Corporation
**Shenzhen, Guangdong 518057 (CN)**

(72) Inventors:
• YUE, Liang
  Shenzhen, Guangdong 518057 (CN)
• SUN, Qingyan
  Shenzhen, Guangdong 518057 (CN)
• DAI, Zhengjian
  Shenzhen, Guangdong 518057 (CN)
• ZHANG, Zuofeng
  Shenzhen, Guangdong 518057 (CN)

(74) Representative: Zoli, Filippo
Brunacci & Partners S.r.l.
Via Pietro Giardini, 625
41125 Modena (IT)

(54) **SIGNAL INTERFERENCE CANCELLATION METHOD AND APPARATUS, AND ELECTRONIC DEVICE**

(57) Embodiments of the present application disclose a signal interference cancellation method and apparatus, and an electronic device. The method comprises: obtain first sample data of a transmitted signal and second sample data of a received signal (S 1000); obtaining an interference cancellation parameter according to the first sample data and the second sample data, the interference cancellation parameter comprising a transmission channel filter coefficient, a nonlinear model coefficient, and a receiving channel filter coefficient (S2000); sequentially performing transmission channel filtering, nonlinear transformation and receiving channel filtering on the transmitted signal according to the interference cancellation parameter so as to obtain a cancellation signal (S3000); and generating, according to the cancellation signal and the received signal, an output signal capable of canceling passive intermodulation interference (S4000).

FIG. 2

**Description**

**CROSS-REFERENCE TO RELATED APPLICATION**

This application is filed on the basis of Chinese patent application No. 202210004327.0 filed January 04, 2022, and claims priority to the Chinese patent application, the entire contents of which are incorporated herein by reference.

**TECHNICAL FIELD**

The present disclosure relates to the technical field of communication, and in particular, to a signal interference cancellation method and apparatus, and an electronic device.

**BACKGROUND**

With the development of wireless communication technologies, people have higher requirements on the traffic volume, coverage of communication and the like, leading to higher transmit power and larger transmit bandwidth of communication base stations. As Frequency Division Duplexing (FDD) is widely used in Remote Radio Units (RRUs), the high power and large bandwidth lead to serious passive intermodulation interference. When the bandwidth of a transmitted signal is large enough, a passive intermodulation interference signal generated by the transmitted signal will fall within a receiving band. If the power of the passive intermodulation interference signal is high enough, background noise of a received signal is raised, affecting the quality of the received signal and thus affecting the coverage of the base station.

Existing FDD-based RRU base stations generally all support multi-band multi-antenna technologies, i.e., signals of more than two frequency bands can be configured on one antenna, and such a base station includes a plurality of transmit and receive antennas at the same time. These antennas are located on the same antenna installation platform, leading to a more complex composition of passive intermodulation interference and more serious impact on the receive end. Therefore, how to cancel passive intermodulation interference in multi-band multi-antenna scenarios concerns the transmission quality of communication signals and user

**SUMMARY**

The following is a summary of the subject matter set forth in this description. This summary is not intended to limit the scope of protection of the claims.

Embodiments of the present disclosure provide a signal interference cancellation method and apparatus, and an electronic device, which can cancel passive intermodulation interference in multi-band multi-antenna scenarios to improve the transmission quality of communication signals and user experience.

In accordance with a first aspect of the present disclosure, an embodiment provides a signal interference cancellation method, including: acquiring first sample data of a transmitted signal and second sample data of a received signal; obtaining an interference cancellation parameter according to the first sample data and the second sample data, where the interference cancellation parameter includes a transmit channel filtering coefficient, a nonlinear model coefficient, and a receive channel filtering coefficient; sequentially performing transmit channel filtering processing, nonlinear transformation, and receive channel filtering processing on the transmitted signal according to the interference cancellation parameter to obtain a cancellation signal; and generating, according to the cancellation signal and the received signal, an output signal capable of canceling passive intermodulation interference.

In accordance with a second aspect of the present disclosure, an embodiment provides a signal interference cancellation apparatus, including: an acquisition module, configured for acquiring first sample data of a transmitted signal and second sample data of a received signal; a calculation module, configured for obtaining an interference cancellation parameter according to the first sample data and the second sample data, where the interference cancellation parameter includes a transmit channel filtering coefficient, a nonlinear model coefficient, and a receive channel filtering coefficient; a processing module, configured for sequentially performing transmit channel filtering processing, nonlinear transformation, and receive channel filtering processing on the transmitted signal according to the interference cancellation parameter to obtain a cancellation signal; and a generation module, configured for generating, according to the cancellation signal and the received signal, an output signal capable of canceling passive intermodulation interference.

In accordance with a third aspect of the present disclosure, an embodiment provides an electronic device, including: a memory, a processor, and a computer program stored in the memory and executable by the processor, where the computer program, when executed by the processor, causes the processor to implement the signal interference cancellation method in accordance with the embodiments of the present disclosure.

In accordance with a fourth aspect of the present disclosure, an embodiment provides a computer-readable storage medium, storing a computer program which, when executed by a processor, causes the processor to implement the signal interference cancellation method in accordance with the embodiments of the present disclosure.

Additional features and advantages of the present disclosure will be set forth in the description which follows, and in part will be obvious from the description, or may be learned by the practice of the present disclosure. The objectives and other advantages of the present disclosure can be realized and obtained by the structures particularly pointed out in the description, claims, and drawings.

## BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, but are not intended to limit the technical schemes of the present disclosure.

FIG. 1 is a structural diagram of an RRU of an existing base station;

FIG. 2 is a schematic flowchart of a signal interference cancellation method according to an embodiment of the present disclosure;

FIG. 3 is a schematic diagram of a specific implementation process of another embodiment of S2000 in FIG. 2;

FIG. 4 is a schematic diagram of a specific implementation process of another embodiment of S2100 in FIG. 3;

FIG. 5 is a schematic diagram of a specific implementation process of another embodiment of S2200 in FIG. 3;

FIG. 6 is a schematic diagram of a specific implementation process of another embodiment of S2300 in FIG. 3;

FIG. 7 is a schematic diagram of a specific implementation process of another embodiment of S2400 in FIG. 3;

FIG. 8 is a schematic diagram of a specific implementation process of another embodiment of S2500 in FIG. 3;

FIG. 9 is a schematic diagram of a specific implementation process of another embodiment of S3000 in FIG. 2;

FIG. 10 is a schematic diagram of a specific implementation process of another embodiment of S3300 in FIG. 9;

FIG. 11 is a schematic diagram of a specific implementation process of another embodiment of S4000 in FIG. 2;

FIG. 12 is a structural diagram of a signal interference cancellation apparatus according to an embodiment of the present disclosure; and

FIG. 13 is a schematic structural diagram of an electronic device according to an embodiment of the present disclosure.

## DETAILED DESCRIPTION

To make the objectives, technical schemes, and advantages of the present disclosure clear, the present disclosure is described in further detail in conjunction with accompanying drawings and examples. It should be understood that the specific embodiments described herein are merely used for illustrating the present disclosure, and are not intended to limit the present disclosure.

It should be understood that in the description of the embodiments of the present disclosure, the terms such as "first", "second" and the like used herein are merely used for distinguishing technical features, and are not intended to indicate or imply relative importance, or implicitly point out the number of the indicated technical features, or implicitly point out a precedence order of the indicated technical features. The term "at least one" means one or more, and the term "a plurality of" means two or more. The term "and/or" is used for describing an association between associated objects and representing that three associations may exist. For example, "A and/or B" may indicate that only A exists, only B exists, and both A and B exist, where A and B may be singular or plural. The character "/" generally indicates an "or" relation between the associated objects. "At least one of" and similar expressions refer to any combination of items listed, including one item or any combination of a plurality of items. For example, at least one of a, b, or c may represent a, b, c, "a and b", "a and c", "b and c", or "a, b, and c", where a, b, and c may be singular or plural.

In addition, the technical features involved in various embodiments of the present disclosure described below can be combined with each other to derive other embodiments not explicitly described.

A signal interference cancellation method involved in the embodiments of the present disclosure is based on Passive Intermodulation Cancellation (PIMC) technology. In order to eliminate passive intermodulation interference of a signal in application scenarios of multi-band multi-antenna technologies, filtering and nonlinear modeling processing in digital domain are performed on a passive intermodulation interference signal falling into a receive band. In practical applications, the coexistence of a plurality of transmit and receive antennas in the communication system leads to more significant passive intermodulation interference and more serious impact on reception. Therefore, the signal interference cancellation method can effectively cancel passive intermodulation interference in multi-band multi-antenna scenarios to improve the transmission quality of communication signals and user experience, and is especially suitable for multi-band multi-antenna application scenarios of FDD-based base stations. For example, at present, a typical scenario of passive intermodulation interference in a communication network is a multi-band multi-antenna application environment in an FDD-based RRU base station.

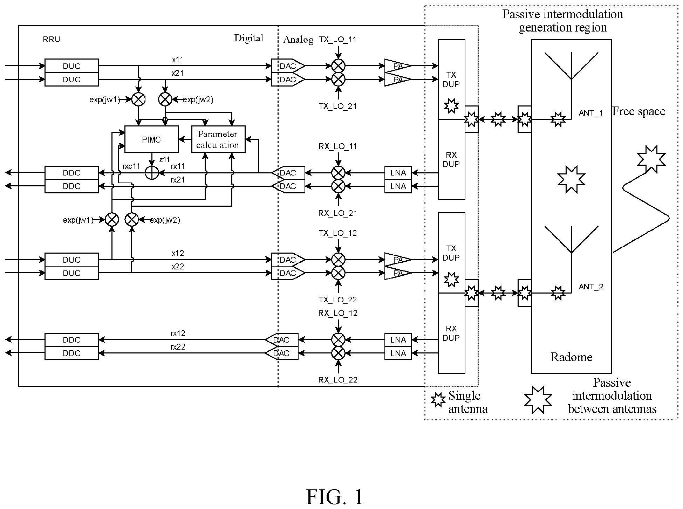

FIG. 1 is a structural diagram of an RRU of an existing base station. As shown in FIG. 1, the RRU has two radio frequency ports, which are respectively connected to two antennas by radio frequency cables. The two antennas are located on the same antenna installation platform, i.e., located inside the same radome. It should be noted that there may be a plurality of radio frequency ports and a plurality of antennas in practice, and two radio frequency ports and two antennas are described herein as an example.

As shown in FIG. 1, a basic operating process of the RRU is as follows. At a transmit end, the RRU converts a digital baseband signal sent from a baseband unit through an optical fiber into a transmitted digital intermediate frequency signal through processing by a Digital Up Converter (DUC). The transmitted digital intermediate frequency signal is converted into a transmitted analog intermediate frequency signal through processing by a Digital to Analog Converter (DAC). The transmitted analog intermediate frequency signal is then converted into a transmitted analog radio frequency signal through mixing processing by a Transmitter Local Oscillator (TX_LO). The transmitted analog radio frequency signal is filtered and sent to an antenna by a Transmitter Duplexer (TX_DUP). Finally, the antenna converts the transmitted analog radio frequency signal into an electromagnetic wave, which is radiated to a free space. At a receive end, an antenna converts the electromagnetic wave received in the free space into a received analog radio frequency signal. The received analog radio frequency signal is filtered by a Receiver Duplexer (RX_DUP) to remove a stray signal outside a receiving band, amplified by a Low Noise Amplifier (LNA), and then converted into a received analog intermediate frequency signal through mixing processing by a Receiver Local Oscillator (RX_LO). The received analog intermediate frequency signal is then converted into a received digital intermediate frequency signal through processing by an Analog to Digital Converter (ADC). The received digital intermediate frequency signal is then converted into a received baseband signal through processing by a Digital Down Converter (DDC). Finally, the received baseband signal is sent to the baseband unit through the optical fiber.

Therefore, the RRU is as a whole divided into two parts: a digital signal processing part and an analog signal processing part, where the signal interference cancellation apparatus proposed in the present disclosure is located in the digital signal processing part of the RRU. The RRU generates a passive intermodulation interference signal when in operation. It can be seen from FIG. 1 that the passive intermodulation interference signal is mainly generated in the duplexer and passive devices after the duplexer. For example, the passive devices include, but not limited to, a radio frequency cable, a radio frequency connector, an antenna, and a metal shield outside an antenna. According to the signal source that generates the passive intermodulation signal, there are two types of passive intermodulation signals. One type is only related to a transmitted signal inside a single antenna, e.g., a passive intermodulation interference signal generated inside a duplexer, a radio frequency cable, a radio frequency connector, etc. The other type is related to transmitted signals of both antennas, e.g., a passive intermodulation interference signal generated on a metal component inside a radome, such as a passive intermodulation interference signal generated on an antenna reflection panel, a feeding network, or a metal shield in a free space outside the radome. It can be seen that, in order to cancel the two types of passive intermodulation signals at the same time, transmitted signals of multiple antennas need to be used, so as to collect sufficient data for interference cancellation on the received signal.

In order to ensure the transmission quality of communication signals, in an existing interference cancellation method for passive intermodulation signals, a passive intermodulation interference signal falling into a receive band is non-linearly transformed and canceled in the digital domain. However, such a method cannot fully indicate the coupling relationship between transmitted signals of multiple antennas, and does not involve combining processing and equalization filtering processing on cancellation signals, failing to achieve efficient and accurate interference cancellation in a multi-band multi-antenna scenario.

In view of the above, the embodiments of the present disclosure provide a signal interference cancellation method and apparatus, an electronic device, and a computer-readable storage medium. In the method, first sample data of a transmitted signal and second sample data of a received signal are periodically acquired; an interference cancellation parameter is obtained through calculation according to the first sample data and the second sample data; transmit channel filtering processing, nonlinear transformation, and receive channel filtering processing are sequentially performed on the transmitted signal according to the interference cancellation parameter to obtain a cancellation signal; and finally an output signal capable of canceling passive intermodulation interference is generated according to the cancellation signal and the received signal. In this way, passive intermodulation interference in multi-band multi-antenna scenarios can be canceled to improve the transmission quality of communication signals and user experience.

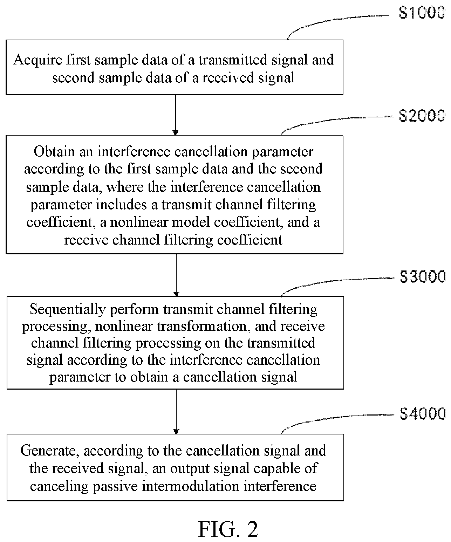

FIG. 2 shows a process of a signal interference cancellation method according to an embodiment of the present disclosure. As shown in FIG. 2, the signal interference cancellation method according to the embodiment of the present disclosure includes the following steps.

In a step of S 1000, first sample data of a transmitted signal and second sample data of a received signal are acquired.

It should be understood that, in order to detect an interference signal generated during operation of a base station, comparison and calculation need to be performed on the transmitted signal and the received signal. Therefore, in order to ensure efficient and accurate signal interference cancellation in a multi-band multi-antenna scenario, the first sample data covering transmitted digital intermediate frequency signals of all antennas and all frequency bands in the transmitted signal needs to be acquired. In addition, in order to quickly and accurately calculate interference from passive devices on the transmitted signal and the received signal, the second sample data of the received signal in the base station that requires interference cancellation, i.e., sample data of a to-be-canceled signal of a certain frequency band of a certain antenna, needs to be acquired.

For example, for ease of distinguishing and operation, the first sample data of the transmitted signal is defined as x, and the second sample data of the received signal is defined as $rx$.

In practical applications, the first sample data and the second sample data may be periodically acquired and transmitted using an existing data acquisition module in the base station, which belongs to the existing technology and will not be detailed herein.

In a step of S2000, an interference cancellation parameter is obtained according to the first sample data and the second sample data, where the interference cancellation parameter includes a transmit channel filtering coefficient, a nonlinear model coefficient, and a receive channel filtering coefficient.

It should be understood that in order to cancel a passive intermodulation interference signal generated in a multi-band multi-antenna scenario, it is necessary to perform transmit channel filtering processing, nonlinear transformation, and receive channel filtering processing on the first sample data of each frequency band and antenna to well reflect a coupling relationship between transmitted signals of multiple antennas to obtain a passive intermodulation signal, and obtain a transmit channel filtering coefficient, a nonlinear model coefficient, and a receive channel filtering coefficient by calculating optimal solutions of cost functions between the passive intermodulation signal and the second sample data.

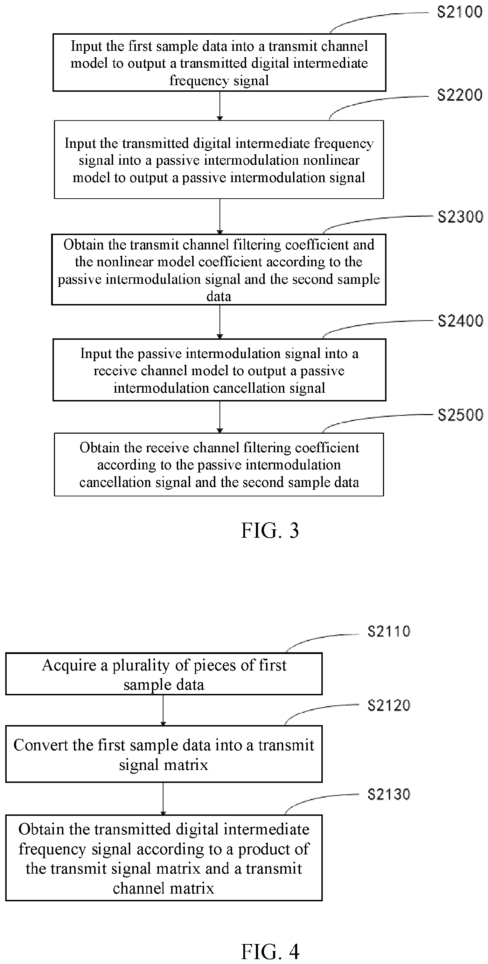

FIG. 3 is a schematic diagram of a specific implementation process of another embodiment of S2000. As shown in FIG. 3, S2000 includes at least the following steps.

In a step of S2100, the first sample data is inputted into a transmit channel model to output a transmitted digital intermediate frequency signal.

FIG. 4 is a schematic diagram of a specific implementation process of another embodiment of S2100. As shown in FIG. 4, S2100 includes at least the following steps.

In a step of S2110, a plurality of pieces of first sample data are acquired.

It should be understood that because existing communication base stations all support multi-band multi-antenna technologies, it is necessary to periodically acquire and process first sample data of transmitted signals of multiple antennas and multiple frequency bands, to achieve a cancellation effect for passive intermodulation interference signals of each antenna and each frequency band in a multi-band multi-antenna application scenario. For example, the acquisition of a plurality of pieces of first sample data requires acquiring first sample data of transmitted digital intermediate frequency signals of all antennas and all frequency bands in the base station.

In a step of S2120, the first sample data is converted into a transmit signal matrix.

It should be understood that after transmitted signal information of each antenna and frequency band in the first sample data is acquired, it is necessary to record the first sample data in the format of a data matrix and perform calculation on the first sample data, i.e., convert the first sample data into a transmit signal matrix, so as to facilitate filtering and non-linear transformation processing of the first sample data.

For example, each transmitted signal may be expressed as $x_{ij}$, where $i$ represents a sequence number of a frequency band, and $j$ represents a sequence number of an antenna, i.e., $x_{ij}$ represents a transmitted signal from a $j$ th antenna in an $i$ th frequency band. For example, assuming that the base station includes m antennas and $n$ frequency bands are configured on each antenna, the first sample data may be expressed as the following transmit signal matrix:

$$X = \begin{bmatrix} x_{11} & x_{12} & \cdots & x_{1m} \\ x_{21} & x_{22} & \cdots & x_{2m} \\ \vdots & \vdots & \ddots & \vdots \\ x_{n1} & x_{n2} & \cdots & x_{nm} \end{bmatrix}.$$

In a step of S2130, the transmitted digital intermediate frequency signal is obtained according to a product of the transmit signal matrix and a transmit channel matrix.

It should be understood that a modeling operation is performed on the transmit signal matrix using a transmit channel equalization filter. For example, the transmit channel equalization filter is a Finite Impulse Response (FIR) filter with a set of complex coefficients, i.e., a non-recursive filter, such that each transmitted signal corresponds to one filter. Therefore, the transmit channel filter may be expressed as the following transmit channel matrix:

$$\alpha = \begin{bmatrix} \alpha_{11} & \alpha_{12} & \cdots & \alpha_{1m} \\ \alpha_{21} & \alpha_{22} & \cdots & \alpha_{2m} \\ \vdots & \vdots & \ddots & \vdots \\ \alpha_{n1} & \alpha_{n2} & \cdots & \alpha_{nm} \end{bmatrix}.$$

where $\alpha_{ij}$ represents a channel equalization filter parameter corresponding to the transmitted signal $x_{ij}$.

It should be understood that because $\alpha_{ij}$ is a complex vector, $\alpha_{ij}$ may be expressed by the following formula:

$$\alpha_{ij} = [\alpha_{ij}(0) \quad \alpha_{ij}(1) \cdots \alpha_{ij}(L_\alpha - 1)],$$

where $L_\alpha$ represents the length of $\alpha_{ij}$. It should be understood that $L_\alpha$ affects modeling precision of the transmit channel equalization filter, and the selection of a specific length of the channel equalization filter parameter needs to be determined by a trade-off between cancellation performance to be achieved and resources required.

It should be understood that the transmit channel filtering processing of the transmitted signal $x_{ij}$ is convolving the transmit signal matrix with the transmit channel matrix, as shown by the following formula:

$$s_{ij} = x_{ij} \otimes \alpha_{ij} = \sum_{\tau=0}^{L_\alpha - 1} x_{ij}(n-\tau) \times \alpha_{ij}(\tau),$$

where $s_{ij}$ represents the transmitted digital intermediate frequency signal obtained through the filtering.

In a step of S2200, the transmitted digital intermediate frequency signal is inputted into a passive intermodulation nonlinear model to output a passive intermodulation signal.

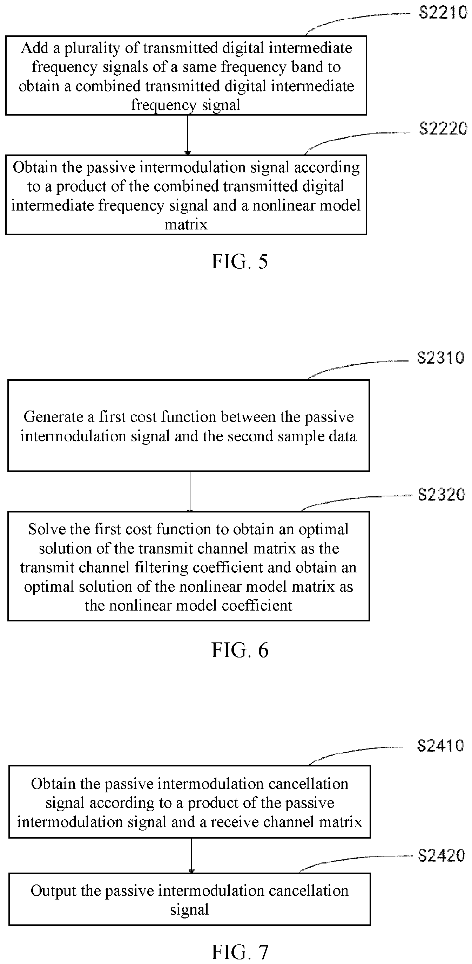

FIG. 5 is a schematic diagram of a specific implementation process of another embodiment of S2200. As shown in FIG. 5, S2200 includes at least the following steps.

In a step of S2210, a plurality of transmitted digital intermediate frequency signals of a same frequency band are added to obtain a combined transmitted digital intermediate frequency signal.

It should be understood that after the transmit channel filtering operation is performed, a plurality of transmitted digital intermediate frequency signals of the same frequency bands are present in multiple antennas. Therefore, it is necessary to combine the transmitted digital intermediate frequency signals of the same frequency band, as shown by the following formula:

$$s_i = \sum_{j=1}^{M} s_{ij} = \sum_{j=1}^{M} \sum_{\tau=0}^{L_\alpha - 1} x_{ij}(n-\tau) \times \alpha_{ij}(\tau),$$

where $M$ represents a maximum number of antennas of the base station, and $s_i$ represents a combined transmitted digital intermediate frequency signal of the $i$<sup>th</sup> frequency band.

In a step of S2220, the passive intermodulation signal is obtained according to a product of the combined transmitted digital intermediate frequency signal and a nonlinear model matrix.

It should be understood that the passive intermodulation signal is generated through modeling using a nonlinear function for combined transmitted digital intermediate frequency signals of a plurality of frequency bands, which may be expressed by the following formula:

$$v = f(s_1, s_2, \ldots, s_N),$$

where $N$ represents the total number of frequency bands. It should be understood that the above formula is expressed as an $N$-variable function, i.e., the total number of frequency bands is the number of variables of the above function. Therefore, the nonlinear function may be expressed as a combination of basis functions, as shown by the following formula:

$$v = f(s_1, s_2, \ldots, s_N) = \sum_{k=1}^{K} a_k [\prod_{i=1}^{N} (s_i)^{pk_i} ((s_i)^*)^{qk_i} g_k(|s_1|, |s_2|, \ldots, |s_N|)],$$

where $a_k$ is a basis function coefficient of a $k$th type of passive intermodulation signal. In practical applications, an intermodulation type falling into the receiving band may be selected according to a frequency configuration of the transmitted signal and a frequency configuration of the received signal. In addition, $(s_i)^*$ represents a conjugate signal of the combined transmitted digital intermediate frequency signal in the $i$th frequency band, and $pk_i$ and $qk_i$ are each a non-negative integer order, so $\prod_{i=1}^{N} (s_i)^{pk_i} ((s_i)^*)^{qk_i}$ is a principal component term of the passive intermodulation signal. It can be seen that when the order $[pk_i, qk_i, i = 1,2\ldots, N]$ is determined, the type and position of the $k$th passive intermodulation signal can also be determined.

In addition, $g_k(|s_1|, |s_2|, \ldots, |s_N|)$ is a nonlinear term, which represents the degree of nonlinearity of the $k$th passive intermodulation signal, and may be further expressed as a basis function. The basis function may be a polynomial basis, spline basis, or other commonly used basis functions. For example, the basis function is a polynomial basis, as shown by the following formula:

$$g_k(|s_1|, |s_2|, \ldots, |s_N|) = \sum_{u=1}^{U} b_{ku} \prod_{i=1}^{N} |s_i|^{r_{ui}},$$

where $b_{ku}$ represents a basis function coefficient of a $u$th polynomial in the $k$th type of passive intermodulation signal, $|s_i|$ represents a modulus value of the combined transmitted digital intermediate frequency signal of the $i$th frequency band, and the order $r_{ui}$ is a nonlinear order and is a non-negative integer. Therefore, after $r_{ui}$ is determined, the type of the basis function representing the $u$th polynomial can also be determined. In addition, the selection of the order $r_{ui}$ will affect the modeling precision of the passive intermodulation cancellation signal. The selection of the specific order needs to be determined by a trade-off between cancellation performance to be achieved and resources required. The above formula is substituted into the expression of the nonlinear function to obtain following formula:

$$v = f(s_1, s_2, \ldots, s_N) = \sum_{k=1}^{K} a_k \{\prod_{i=1}^{N} (s_i)^{pk_i} ((s_i)^*)^{qk_i} [\sum_{u=1}^{U} b_{ku} \prod_{i=1}^{N} |s_i|^{r_{ui}}]\}.$$

The above formula is transformed to obtain the following formula:

$$v = f(s_1, s_2, \ldots, s_N) = \sum_{k=1}^{K} \sum_{u=1}^{U} a_k b_{ku} [\prod_{i=1}^{N} (s_i)^{pk_i} ((s_i)^*)^{qk_i}][\prod_{i=1}^{N} |s_i|^{r_{ui}}].$$

Let $\omega_{ku} = a_k b_{ku}$ to obtain the following formula:

$$v = f(s_1, s_2, \ldots, s_N) = \sum_{k=1}^{K} \sum_{u=1}^{U} \omega_{ku} [\prod_{i=1}^{N} (s_i)^{pk_i} ((s_i)^*)^{qk_i}][\prod_{i=1}^{N} |s_i|^{r_{ui}}].$$

Therefore, $\omega_{ku}$ represents a parameter of the passive intermodulation nonlinear model, which may be expressed as a matrix:

$$\omega = \begin{bmatrix} \omega_{11} & \omega_{12} & \cdots & \omega_{1U} \\ \omega_{21} & \omega_{22} & \cdots & \omega_{2U} \\ \vdots & \vdots & \ddots & \vdots \\ \omega_{K1} & \omega_{K2} & \cdots & \omega_{KU} \end{bmatrix}.$$

Therefore, a nonlinear model function of the passive intermodulation signal can be expressed as the following formula:

$$v = f(\omega|(s_1, s_2, \ldots, s_N)).$$

According to the above formula, it can be obtained that the nonlinear model function is a $N$ -variable function of the combined transmitted digital intermediate frequency signal $s_1, s_2, \ldots, s_N$, with a parameter $\omega$. The combined transmitted digital intermediate frequency signal $s_1, s_2, \ldots, s_N$ is a function of the transmitted signal $x_{ij}$, with a parameter $\alpha$. Therefore, the passive intermodulation cancellation signal is actually a function of the transmitted signal $x_{ij}$, with parameters $\alpha$ and $\omega$, as expressed by the following formula:

$$v = f(\alpha, \omega|X).$$

In order to further improve the modeling precision, multiple stages of passive intermodulation signals may be constructed using the same method. For ease of description, the above model is expressed as:

$$v^{(l)} = f(\alpha^{(l)}, \omega^{(l)}|X),$$

where $v^{(l)}$ represents a function of an $l$th stage of the model, and $\alpha^{(l)}$ and $\omega^{(l)}$ represent parameters of the $l$th stage of the model. The multiple stages of passive intermodulation signals are summed to obtain a combined passive intermodulation signal, as expressed by the following formula:

$$y = v^{(1)} + v^{(2)} + \cdots + v^{(L)},$$

where L represents the total number of stages of the nonlinear model, and Y represents the combined passive intermodulation signal. It can be understood that the combined passive intermodulation signal $y$ is a function of the transmitted signal $x_{ij}$, with parameters $[\alpha^{(l)}, \ldots, \alpha^{(L)}]$ and $[\omega^{(l)}, \ldots, \omega^{(L)}]$.

In a step of S2300, the transmit channel filtering coefficient and the nonlinear model coefficient are obtained according to the passive intermodulation signal and the second sample data.

FIG. 6 is a schematic diagram of a specific implementation process of another embodiment of S2300. As shown in FIG. 6, S2300 includes at least the following steps.

In a step of S2310, a first cost function between the passive intermodulation signal and the second sample data is generated.

For example, the first cost function can be defined as a sum of squared errors between the combined passive intermodulation signal Y and the received signal $rx$. The first cost function is as follows:

$$J(\alpha, \omega) = \|y(\alpha, \omega) - rx\|^2,$$

where the first cost function $J(\alpha, \omega)$ represents the sum of squared errors between the combined passive intermodulation signal Y generated using the nonlinear model and the received signal $rx$. The first cost function is a function of the parameters $\alpha$ and $\omega$. A smaller sum of squared errors indicates a higher similarity between the combined passive intermodulation signal $y$ and the received signal $rx$, i.e., higher precision of passive intermodulation modeling. In this way, the precision problem of passive intermodulation modeling is changed into finding appropriate parameters $\alpha$ and $\omega$, such that the first cost function $J(\alpha, \omega)$ reaches a minimum value.

In a step of S2320, the first cost function is solved to obtain an optimal solution of the transmit channel matrix as the transmit channel filtering coefficient and obtain an optimal solution of the nonlinear model matrix as the nonlinear model coefficient.

It should be understood that the combined passive intermodulation signal $y$ is nonlinear with respect to the parameters $\alpha$ and $\omega$, so the first cost function is a nonlinear least squares optimization problem, and any nonlinear optimization algorithm such as a gradient descent method can be used to solve the parameters $\alpha$ and $\omega$, which will not be detailed herein.

It should be understood that by solving the minimum value of the first cost function $J(\alpha, \omega)$, the optimal solution $\alpha$ of the transmit channel matrix obtained is used as the transmit channel filtering coefficient, and the optimal solution $\omega$ of the nonlinear model matrix obtained is used as the nonlinear model coefficient.

In a step of S2400, the passive intermodulation signal is inputted into a receive channel model to output a passive intermodulation cancellation signal.

It should be understood that after the parameters $\alpha$ and $\omega$ are calculated and substituted into the above formula, the combined passive intermodulation signal $y$ can be calculated according to the parameters $\alpha$ and $\omega$ and the transmitted signal $x$.

FIG. 7 is a schematic diagram of a specific implementation process of another embodiment of S2400. As shown in FIG. 7, S2400 includes at least the following steps.

In a step of S2410, the passive intermodulation cancellation signal is obtained according to a product of the passive intermodulation signal and a receive channel matrix.

It should be understood that, similar to the above step S2130, the receive channel equalization filter is also an FIR filter with complex coefficients, so a coefficient of the receive channel equalization filter may be expressed by the following formula:

$$\beta = [\beta\ (0)\ \ \beta\ (1)\cdots\beta\ (L_\beta - 1)],$$

where $L_\beta$ represents the length of $\beta$. It should be understood that the length $L_\beta$ of the coefficient of the filter affects modeling precision of the passive intermodulation cancellation signal, and the selection of the specific length of the coefficient of the filter needs to be determined by a trade-off between cancellation performance to be achieved and resources required.

The combined passive intermodulation signal Y obtained in the above steps is convolved with the receive channel matrix $\beta$, as shown by the following formula:

$$z = y \otimes \beta = \sum_{\tau=0}^{L_\beta - 1} y(n - \tau) \times \beta(\tau),$$

where z represents the passive intermodulation cancellation signal.

In a step of S2420, the passive intermodulation cancellation signal is outputted.

It should be understood that the combined passive intermodulation signal $y$ is converted into a passive intermodulation cancellation signal $z$ through receive channel equalization filtering processing. Then, the passive intermodulation cancellation signal $z$ is outputted. In this way, the passive intermodulation cancellation signal can be obtained by sequentially processing the first sample data by the transmit channel model, the passive intermodulation nonlinear model, and the receive channel model.

In a step of S2500, the receive channel filtering coefficient is obtained according to the passive intermodulation cancellation signal and the second sample data.

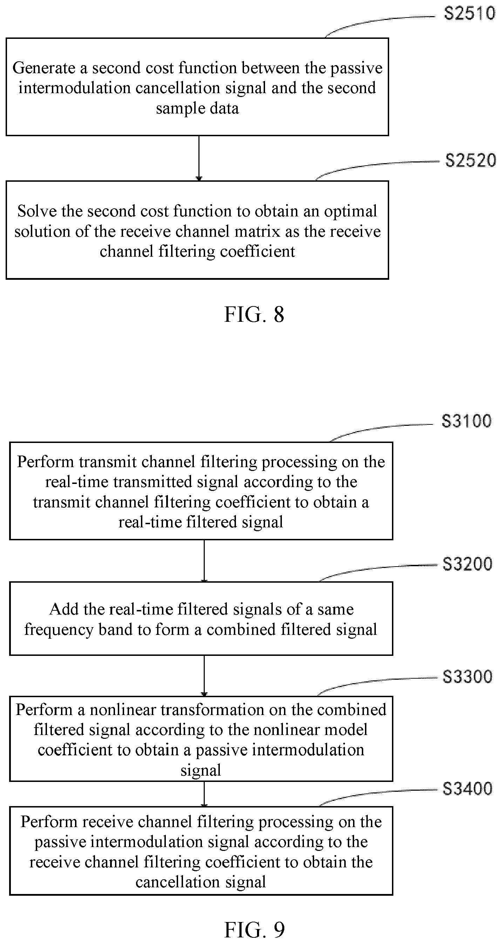

FIG. 8 is a schematic diagram of a specific implementation process of another embodiment of S2500. As shown in FIG. 8, S2500 includes at least the following steps.

In a step of S2510, a second cost function between the passive intermodulation cancellation signal and the second sample data is generated.

Similar to the above step S2310, the second cost function is defined as the sum of squared errors between the passive intermodulation cancellation signal z and the received signal $rx$. The second cost function is as follows:

$$J(\beta) = \left\| z(\beta) - rx \right\|^2 .$$

It should be understood that the second cost function $J(\beta)$ represents the sum of squared errors between the passive intermodulation cancellation signal $z$ obtained through the receive channel equalization filtering and the received signal $rx$ . The second cost function is a function of the parameter $\beta$ . A smaller sum of squared errors indicates a higher similarity between the passive intermodulation cancellation signal $z$ and the received signal $rx$ , i.e., higher precision of passive intermodulation modeling. In this way, the problem is changed into finding an appropriate parameter $\beta$, such that the second cost function reaches a minimum value.

In a step of S2520, the second cost function is solved to obtain an optimal solution of the receive channel matrix as the receive channel filtering coefficient.

It should be understood that in order to solve the parameter $\beta$ , the second cost function is still solved using the least squares method. The passive intermodulation cancellation signal z is linear with respect to the parameter $\beta$ , so the second cost function is a linear least squares optimization problem, and can be solved using any linear least squares solution method.

It should be understood that by solving the minimum value of the second cost function $J(\beta)$, the optimal solution $\beta$ of the receive channel matrix obtained is used as the receive channel filtering coefficient.

In a step of S3000, transmit channel filtering processing, nonlinear transformation, and receive channel filtering processing are sequentially performed on the transmitted signal according to the interference cancellation parameter to obtain a cancellation signal.

It should be understood that the transmit channel filtering coefficient $\alpha$, the nonlinear model coefficient $\omega$ , and the receive channel filtering coefficient $\beta$ are obtained through the above steps, and a real-time cancellation signal can be acquired by performing transmit channel filtering processing, nonlinear transformation, and receive channel filtering processing on a real-time transmitted signal through the above steps.

FIG. 9 is a schematic diagram of a specific implementation process of another embodiment of S3000. As shown in FIG. 9, S3000 includes at least the following steps.

In a step of S3100, transmit channel filtering processing is performed on the real-time transmitted signal according to the transmit channel filtering coefficient to obtain a real-time filtered signal.

It should be understood that, similar to the above step S2130, the transmit channel filtering processing is performed on the real-time transmitted signal $x_{ij}$ according to the transmit channel filtering coefficient $\alpha$ , as shown by the following formula:

$$s_{ij} = x_{ij} \otimes \alpha .$$

In a step of S3200, the real-time filtered signals of a same frequency band are added to form a combined filtered signal.

It should be understood that similar to the above step S2210, the real-time filtered signals of the same frequency band are added to form a combined filtered signal, as shown by the following formula:

$$s_i = \sum_{j=1}^{M} s_{ij} = \sum_{j=1}^{M} x_{ij} \otimes \alpha .$$

In a step of S3300, a nonlinear transformation is performed on the combined filtered signal according to the nonlinear model coefficient to obtain a passive intermodulation signal.

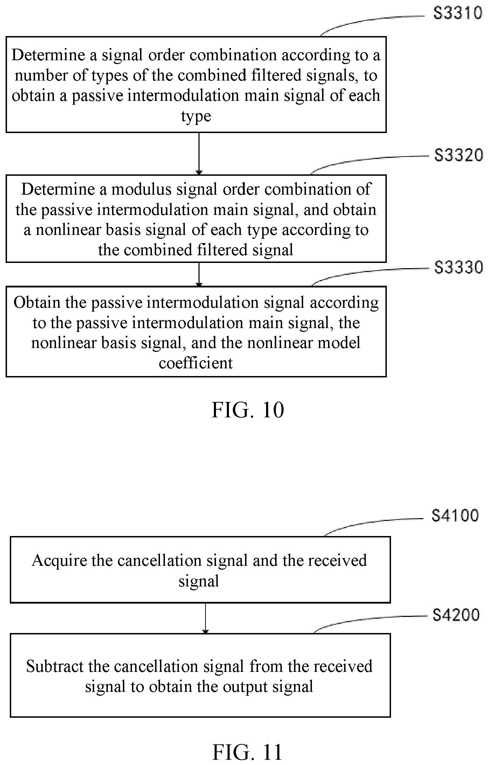

FIG. 10 is a schematic diagram of a specific implementation process of another embodiment of S3300. As shown in FIG. 10, S3300 includes at least the following steps.

In a step of S3310, a signal order combination is determined according to a number of types of the combined filtered signals, to obtain a passive intermodulation main signal of each type.

It should be understood that the signal order combination $[pk_i, qk_i, i = 1,2..., N]$ of the $k$ th passive intermodulation needs to be determined first. For example, intermodulation types falling into the receiving band can be predetermined according to the frequency configuration of the transmitted signal and the frequency configuration of the received signal. Then, according to a calculation formula for a passive intermodulation main signal, a $k$ th passive intermodulation main signal is calculated. The specific calculation formula is as follows:

$$c_k = \prod_{i=1}^{N} (s_i)^{pk_i} ((s_i)^*)^{qk_i} ,$$

where $c_k$ represents the $k$ th passive intermodulation main signal.

In a step of S3320, a modulus signal order combination of the passive intermodulation main signal is determined, and a nonlinear basis signal of each type is obtained according to the combined filtered signal.

It should be understood that a modulus signal order combination $[r_{ui}, i = 1,2, \cdots, N]$ of a $u$ th polynomial type needs to be determined first. The selection of the order $r_{ui}$ affects modeling precision of the passive intermodulation cancellation signal, and the selection of the specific order needs to be determined by a trade-off between cancellation performance to be achieved and resources required. According to a calculation formula for a nonlinear basis, a $k$ th nonlinear basis signal is obtained. The specific calculation formula is as follows:

$$b_u = [\prod_{i=1}^{N} |s_i|^{r_{ui}}] ,$$

where $b_u$ represents a $u$ th nonlinear basis signal.

In a step of S3330, the passive intermodulation signal is obtained according to the passive intermodulation main signal, the nonlinear basis signal, and the nonlinear model coefficient.

It should be understood that the $k$ th passive intermodulation signal is calculated through multiplication according to the $k$ th passive intermodulation main signal $c_k$ and the $u$ th nonlinear basis signal $b_u$ calculated through the above steps. The specific calculation formula is as follows:

$$d_k = \sum_{u=1}^{U} \omega c_k b_u = \sum_{u=1}^{U} \omega [\prod_{i=1}^{N} (s_i)^{pk_i} ((s_i)^*)^{qk_i}][\prod_{i=1}^{N} |s_i|^{r_{ui}}] ,$$

where $d_k$ represents the $k$ th passive intermodulation signal.

For example, when there are a plurality of types of passive intermodulation signals, the plurality of types of passive intermodulation signals need to be added to generate a passive intermodulation signal. The calculation formula is as follows:

$$v = \sum_{k=1}^{K} d_k .$$

For example, when there are multiple stages of passive intermodulation signals, the multiple stages of passive intermodulation signals need to be added to generate a combined passive intermodulation signal. The calculation formula is as follows:

$$y = v^{(1)} + v^{(2)} + \cdots + v^{(L)} ,$$

where Y represents the combined passive intermodulation signal.

In a step of S3400, receive channel filtering processing is performed on the passive intermodulation signal according to the receive channel filtering coefficient to obtain the cancellation signal.

It should be understood that, similar to the above step S2410, the passive intermodulation signal is obtained by convolving the combined passive intermodulation signal Y with the nonlinear model coefficient $\beta$. The calculation formula is as follows:

$$z = y \otimes \beta = \sum_{\tau=0}^{L_\beta - 1} y(n-\tau) \times \beta(\tau) ,$$

where z represents the cancellation signal.

In a step of S4000, an output signal capable of canceling passive intermodulation interference is generated according to the cancellation signal and the received signal.

FIG. 11 is a schematic diagram of a specific implementation process of another embodiment of S4000. As shown in FIG. 11, S4000 includes at least the following steps.

In a step of S4100, the cancellation signal and the received signal are acquired.

It should be understood that the cancellation signal z and the received signal *rx* are acquired through the above step, so that real-time interference cancellation processing can be performed on the received signal *rx* .

In a step of S4200, the cancellation signal is subtracted from the received signal to obtain the output signal.

It should be understood that the output signal is a communication signal obtained by optimizing the received signal using the cancellation signal, and passive intermodulation interference in the received signal can be effectively eliminated. The calculation formula is as follows:

$$rxc = rx - z \text{,}$$

where *rxc* represents the output signal obtained by eliminating the passive intermodulation interference.

The signal interference cancellation method provided in the embodiments of the present disclosure is applicable to a Long Term Evolution (LTE) network scenario, a 5G network scenario, and a hybrid LTE/5G network scenario, and can effectively cancel passive intermodulation interference in multi-band multi-antenna scenarios to improve the transmission quality of communication signals and user experience.

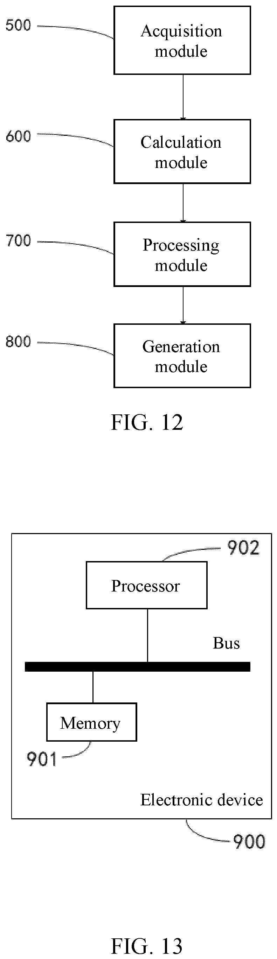

FIG. 12 is a schematic structural diagram of a signal interference cancellation apparatus according to an embodiment of the present disclosure. The entire process of the signal interference cancellation method provided in the embodiments of the present disclosure involves the following modules in the signal interference cancellation apparatus: an acquisition module 500, a calculation module 600, a processing module 700, and a generation module 800.

The acquisition module 500 is configured for acquiring first sample data of a transmitted signal and second sample data of a received signal. The calculation module 600 is configured for obtaining an interference cancellation parameter according to the first sample data and the second sample data, where the interference cancellation parameter includes a transmit channel filtering coefficient, a nonlinear model coefficient, and a receive channel filtering coefficient. The processing module 700 is configured for sequentially performing transmit channel filtering processing, nonlinear transformation, and receive channel filtering processing on the transmitted signal according to the interference cancellation parameter to obtain a cancellation signal. The generation module 800 is configured for generating, according to the cancellation signal and the received signal, an output signal capable of canceling passive intermodulation interference.

It should be noted that the information exchange and execution processes between the modules of the above apparatus are based on the same idea as the method embodiments of the present disclosure. For specific functions and technical effects of the modules, reference may be made to the descriptions in the method embodiments, and the details will not be repeated herein.

FIG. 13 shows an electronic device 900 according to an embodiment of the present disclosure. The electronic device 900 includes, but not limited to:

a memory 901, configured for storing a program; and

a processor 902, configured for executing the program stored in the memory 901, where the program stored in the memory 901, when executed by the processor 902, causes the processor 902 to implement the signal interference cancellation method described above.

The processor 902 and the memory 901 may be connected by a bus or in other ways.

The memory 901, as a non-transitory computer-readable storage medium, may be configured for storing a non-transitory software program and a non-transitory computer-executable program, for example, the signal interference cancellation method described in any one of the embodiments of the present disclosure. The processor 902 runs the non-transitory software program and the non-transitory computer-executable program stored in the memory 901, to implement the signal interference cancellation method.

The memory 901 may include a program storage area and a data storage area. The program storage area may store an operating system, and an application required by at least one function. The data storage area may store data and the like required for executing the signal interference cancellation method. In addition, the memory 901 may include a high-speed random access memory, and may also include a non-transitory memory, e.g., at least one magnetic disk storage device, flash memory device, or other non-transitory solid-state storage device. In some implementations, the memory 901 optionally includes memories located remotely from the processor 902, and the remote memories may be connected to the processor 902 via a network. Examples of the network include, but not limited to, the Internet, an intranet, a local area network, a mobile communication network, and combinations thereof.

The non-transitory software program and instructions required to implement the signal interference cancellation method are stored in the memory 901 which, when executed by one or more processors 902, cause the one or more processors 902 to implement the signal interference cancellation method according to any one of the embodiments of the present disclosure.

An embodiment of the present disclosure provides a storage medium, storing computer-executable instruction which, when executed by a processor, causes the processor to implement the signal interference cancellation method.

In an embodiment, the storage medium stores a computer-executable instruction which, when executed by one or more control processors 902, for example, by the processor 902 in the electronic device 900, may cause the one or more processors 902 to execute the signal interference cancellation method according to any one of the embodiments of the present disclosure.

The embodiments described above are merely examples. The units described as separate components may or may not be physically separated, i.e., may be located in one place or may be distributed over a plurality of network units. Some or all of the modules may be selected according to actual needs to achieve the objectives of the solution of this embodiment.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

Although some embodiments of the present disclosure have been described above, the present disclosure is not limited to the implementations described above. Those having ordinary skills in the art can make various equivalent modifications or replacements without departing from the essence of the present disclosure. Such equivalent modifications or replacements fall within the scope defined by the claims of the present disclosure.

**Claims**

1. A signal interference cancellation method, applied to a base station, the method comprising:

   acquiring first sample data of a transmitted signal and second sample data of a received signal;
   obtaining an interference cancellation parameter according to the first sample data and the second sample data, wherein the interference cancellation parameter comprises a transmit channel filtering coefficient, a nonlinear model coefficient, and a receive channel filtering coefficient;
   sequentially performing transmit channel filtering processing, nonlinear transformation, and receive channel filtering processing on the transmitted signal according to the interference cancellation parameter to obtain a cancellation signal; and
   generating, according to the cancellation signal and the received signal, an output signal capable of canceling passive intermodulation interference.

2. The method of claim 1, wherein obtaining an interference cancellation parameter according to the first sample data and the second sample data comprises:

   inputting the first sample data into a transmit channel model to output a transmitted digital intermediate frequency signal;
   inputting the transmitted digital intermediate frequency signal into a passive intermodulation nonlinear model to output a passive intermodulation signal;
   obtaining the transmit channel filtering coefficient and the nonlinear model coefficient according to the passive intermodulation signal and the second sample data;
inputting the passive intermodulation signal into a receive channel model to output a passive intermodulation cancellation signal; and
obtaining the receive channel filtering coefficient according to the passive intermodulation cancellation signal and the second sample data.

3. The method of claim 2, wherein inputting the first sample data into a transmit channel model to output a transmitted digital intermediate frequency signal comprises:

   acquiring a plurality of pieces of first sample data;
   converting the first sample data into a transmit signal matrix; and
   obtaining the transmitted digital intermediate frequency signal according to a product of the transmit signal matrix and a transmit channel matrix.

4. The method of claim 3, wherein inputting the transmitted digital intermediate frequency signal into a passive intermodulation nonlinear model to output a passive intermodulation signal comprises:

   adding a plurality of transmitted digital intermediate frequency signals of a same frequency band to obtain a combined transmitted digital intermediate frequency signal; and
   obtaining the passive intermodulation signal according to a product of the combined transmitted digital intermediate frequency signal and a nonlinear model matrix.

5. The method of claim 4, wherein obtaining the transmit channel filtering coefficient and the nonlinear model coefficient according to the passive intermodulation signal and the second sample data comprises:

   generating a first cost function between the passive intermodulation signal and the second sample data; and
   solving the first cost function to obtain an optimal solution of the transmit channel matrix as the transmit channel filtering coefficient and obtain an optimal solution of the nonlinear model matrix as the nonlinear model coefficient.

6. The method of claim 2, wherein inputting the passive intermodulation signal into a receive channel model to output a passive intermodulation cancellation signal comprises:
   obtaining the passive intermodulation cancellation signal according to a product of the passive intermodulation signal and a receive channel matrix.

7. The method of claim 6, wherein obtaining the receive channel filtering coefficient according to the passive intermodulation cancellation signal and the second sample data comprises:

   generating a second cost function between the passive intermodulation cancellation signal and the second sample data; and
   solving the second cost function to obtain an optimal solution of the receive channel matrix as the receive channel filtering coefficient.

8. The method of claim 1, wherein sequentially performing transmit channel filtering processing, nonlinear transformation, and receive channel filtering processing on the transmitted signal according to the interference cancellation parameter to obtain a cancellation signal comprises:

   performing transmit channel filtering processing on the transmitted signal in real time according to the transmit channel filtering coefficient to obtain a real-time filtered signal;
   adding the real-time filtered signals of a same frequency band to form a combined filtered signal;
   performing a nonlinear transformation on the combined filtered signal according to the nonlinear model coefficient to obtain a passive intermodulation signal; and
   performing receive channel filtering processing on the passive intermodulation signal according to the receive channel filtering coefficient to obtain the cancellation signal.

9. The method of claim 8, wherein performing a nonlinear transformation on the combined filtered signal according to the nonlinear model coefficient to obtain a passive intermodulation signal comprises:

   determining a signal order combination according to a number of types of the combined filtered signals, to obtain a passive intermodulation main signal of each type;

determining a modulus signal order combination of the passive intermodulation main signal, and obtaining a nonlinear basis signal of each type according to the combined filtered signal; and

obtaining the passive intermodulation signal according to the passive intermodulation main signal, the nonlinear basis signal, and the nonlinear model coefficient.

10. The method of claim 1, wherein generating, according to the cancellation signal and the received signal, an output signal capable of canceling passive intermodulation interference comprises:
subtracting the cancellation signal from the received signal to obtain the output signal.

11. A signal interference cancellation apparatus, comprising:

an acquisition module, configured for acquiring first sample data of a transmitted signal and second sample data of a received signal;

a calculation module, configured for obtaining an interference cancellation parameter according to the first sample data and the second sample data, wherein the interference cancellation parameter comprises a transmit channel filtering coefficient, a nonlinear model coefficient, and a receive channel filtering coefficient;

a processing module, configured for sequentially performing transmit channel filtering processing, nonlinear transformation, and receive channel filtering processing on the transmitted signal according to the interference cancellation parameter to obtain a cancellation signal; and

a generation module, configured for generating, according to the cancellation signal and the received signal, an output signal capable of canceling passive intermodulation interference.

12. An electronic device, comprising: a memory, a processor, and a computer program stored in the memory and executable by the processor, wherein the computer program, when executed by the processor, causes the processor to perform the signal interference cancellation method of any one of claims 1 to 10.

13. A computer-readable storage medium, storing a computer program which, when executed by a processor, causes the processor to perform the signal interference cancellation method of any one of claims 1 to 10.

FIG. 1

S1000

Acquire first sample data of a transmitted signal and second sample data of a received signal

S2000

Obtain an interference cancellation parameter according to the first sample data and the second sample data, where the interference cancellation parameter includes a transmit channel filtering coefficient, a nonlinear model coefficient, and a receive channel filtering coefficient

S3000

Sequentially perform transmit channel filtering processing, nonlinear transformation, and receive channel filtering processing on the transmitted signal according to the interference cancellation parameter to obtain a cancellation signal

S4000

Generate, according to the cancellation signal and the received signal, an output signal capable of canceling passive intermodulation interference

FIG. 2

Input the first sample data into a transmit channel model to output a transmitted digital intermediate frequency signal — S2100

Input the transmitted digital intermediate frequency signal into a passive intermodulation nonlinear model to output a passive intermodulation signal — S2200

Obtain the transmit channel filtering coefficient and the nonlinear model coefficient according to the passive intermodulation signal and the second sample data — S2300

Input the passive intermodulation signal into a receive channel model to output a passive intermodulation cancellation signal — S2400

Obtain the receive channel filtering coefficient according to the passive intermodulation cancellation signal and the second sample data — S2500

FIG. 3

Acquire a plurality of pieces of first sample data — S2110

Convert the first sample data into a transmit signal matrix — S2120

Obtain the transmitted digital intermediate frequency signal according to a product of the transmit signal matrix and a transmit channel matrix — S2130

FIG. 4

S2210

Add a plurality of transmitted digital intermediate frequency signals of a same frequency band to obtain a combined transmitted digital intermediate frequency signal

S2220

Obtain the passive intermodulation signal according to a product of the combined transmitted digital intermediate frequency signal and a nonlinear model matrix

FIG. 5

S2310

Generate a first cost function between the passive intermodulation signal and the second sample data

S2320

Solve the first cost function to obtain an optimal solution of the transmit channel matrix as the transmit channel filtering coefficient and obtain an optimal solution of the nonlinear model matrix as the nonlinear model coefficient

FIG. 6

S2410

Obtain the passive intermodulation cancellation signal according to a product of the passive intermodulation signal and a receive channel matrix

S2420

Output the passive intermodulation cancellation signal

FIG. 7

S2510

Generate a second cost function between the passive intermodulation cancellation signal and the second sample data

S2520

Solve the second cost function to obtain an optimal solution of the receive channel matrix as the receive channel filtering coefficient

FIG. 8

S3100

Perform transmit channel filtering processing on the real-time transmitted signal according to the transmit channel filtering coefficient to obtain a real-time filtered signal

S3200

Add the real-time filtered signals of a same frequency band to form a combined filtered signal

S3300

Perform a nonlinear transformation on the combined filtered signal according to the nonlinear model coefficient to obtain a passive intermodulation signal

S3400

Perform receive channel filtering processing on the passive intermodulation signal according to the receive channel filtering coefficient to obtain the cancellation signal

FIG. 9

S3310

Determine a signal order combination according to a number of types of the combined filtered signals, to obtain a passive intermodulation main signal of each type

S3320

Determine a modulus signal order combination of the passive intermodulation main signal, and obtain a nonlinear basis signal of each type according to the combined filtered signal

S3330

Obtain the passive intermodulation signal according to the passive intermodulation main signal, the nonlinear basis signal, and the nonlinear model coefficient

FIG. 10

S4100

Acquire the cancellation signal and the received signal

S4200

Subtract the cancellation signal from the received signal to obtain the output signal

FIG. 11

500 — Acquisition module

600 — Calculation module

700 — Processing module

800 — Generation module

FIG. 12

902 — Processor

Bus

Memory

901

Electronic device

900

FIG. 13

<div align="center">

**INTERNATIONAL SEARCH REPORT**

</div>

| International application No. |
| --- |
| **PCT/CN2022/142857** |

| A. | CLASSIFICATION OF SUBJECT MATTER |
| --- | --- |

H04B1/10(2006.01)i;H04B1/525(2015.01)i

According to International Patent Classification (IPC) or to both national classification and IPC

| B. | FIELDS SEARCHED |
| --- | --- |

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

USTXT; EPTXT; WOTXT; CNTXT; CNABS; VEN; CNKI; IEEE; IEEE: 互调干扰, 无源互调, 抵消, 非线性, 非线性变换, 非线性转换, 接收, 滤波器系数, 滤波系数, 信道, cancel+, counteract+, interference, nonlinear, PIM, Passive intermodulation, Passive inter-modulation, non-linear, coefficient?, filter+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2017147759 A1 (HUAWEI TECHNOLOGIES CO., LTD.) 08 September 2017 (2017-09-08)<br>      description, page 14, the third-to-last line to page 18, line 14, and page 26, lines 9-21 | 1-13 |
| A | WO 2019080124 A1 (HUAWEI TECHNOLOGIES CO., LTD.) 02 May 2019 (2019-05-02)<br>      description, page 6, the last line to page 8, line 17 | 1-13 |
| A | CN 104283580 A (SHANGHAI HUAWEI TECHNOLOGIES CO., LTD.) 14 January 2015 (2015-01-14)<br>      entire document | 1-13 |
| A | CN 109495127 A (HK FANXING TECHNOLOGY CO., LTD.) 19 March 2019 (2019-03-19)<br>      entire document | 1-13 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **14 February 2023** | **23 February 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/142857**

| Patent document cited in search report | | | Publication date (day/month/year) | Patent family member(s) | | | Publication date (day/month/year) |
|---|---|---|---|---|---|---|---|
| WO | 2017147759 | A1 | 08 September 2017 | CN | 109075808 | A | 21 December 2018 |
| | | | | CN | 109075808 | B | 09 February 2021 |
| WO | 2019080124 | A1 | 02 May 2019 | EP | 3687074 | A1 | 29 July 2020 |
| | | | | EP | 3687074 | A4 | 19 August 2020 |
| | | | | US | 2020252094 | A1 | 06 August 2020 |
| | | | | US | 10911084 | B2 | 02 February 2021 |
| | | | | CN | 111108694 | A | 05 May 2020 |
| | | | | CN | 111108694 | B | 14 September 2021 |
| | | | | IN | 202037016979 | A | 12 June 2020 |
| CN | 104283580 | A | 14 January 2015 | EP | 3176951 | A1 | 07 June 2017 |
| | | | | EP | 3176951 | A4 | 13 September 2017 |
| | | | | EP | 3176951 | B1 | 22 September 2021 |
| | | | | US | 2017201277 | A1 | 13 July 2017 |
| | | | | WO | 2016050062 | A1 | 07 April 2016 |
| | | | | CN | 104283580 | B | 28 September 2016 |
| CN | 109495127 | A | 19 March 2019 | WO | 2020103434 | A1 | 28 May 2020 |
| | | | | CN | 109495127 | B | 03 September 2021 |

Form PCT/ISA/210 (patent family annex) (July 2022)

**REFERENCES CITED IN THE DESCRIPTION**

**Patent documents cited in the description**

- CN 202210004327